# EUROPEAN PATENT APPLICATION

(11) **EP 4 776 740 A1**
(43) Date of publication of application: **15.07.2026**
(21) Application number: 23951491.2
(22) Date of filing: 06.09.2023
(51) Int. Cl.: H04W 76/00, H04W 8/26, H04W 12/42, H04W 60/00

(54) **NETWORK NODE, TERMINAL, AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); SASAGAWA, Tetsuhiro, Tokyo 100-6150 (JP); HIKOSAKA, Maoki, Tokyo 100-6150 (JP)
(74) Representative: Hoffmann Eitle
(86) International application number: PCT/JP2023/032553
(87) International publication number: WO 2025/052593

(57) **Abstract**

A network node includes: a reception unit configured to receive a registration request transmitted from a terminal, the registration request including a shared subscriber identifier corresponding to a provisional profile; a control unit configured to store information related to the terminal by associating the shared subscriber identifier with an additional subscriber identifier generated for the terminal; and a transmission unit configured to transmit a message related to registration of the terminal including the shared subscriber identifier and the additional subscriber identifier to another network node.

## Description

### TECHNICAL FIELD

The present invention relates to a network node, terminal, and communication method in a communication system.

### BACKGROUND ART

In 3GPP (registered trademark) (3rd Generation Partnership Project), in order to realize a further increase in a system capacity, a further increase in data transmission speed, and a further decrease in delay in a wireless communication section, etc., a wireless communication method called "5G" or "New Radio (NR)" is being studied (hereinafter, the wireless communication method is referred to as "5G" or "NR"). In 5G, various wireless technologies are being studied in order to satisfy the requirement of reducing a radio link delay of 1 ms or less while achieving a throughput of 10 Gbps or more.

In NR, network architectures including 5G Core Network (5GC) corresponding to Evolved Packet Core (EPC), which is a core network in the network architecture of Long Term Evolution (LTE), and Next Generation-Radio Access Network (NG-RAN) corresponding to an Evolved Universal Terrestrial Radio Access Network (E-UTRAN), which is a Radio Access Network (RAN) in the network architecture of LTE, are being studied (e.g., Non-Patent Literature 1).

In addition, studies on future systems or 6G have started. In such future systems, a wide range of requirements in terms of power consumption, delay, communication speed, and the like are assumed for a broad variety of terminals including Ambient IoT such as radio tags and XR with functions that extend virtual reality.

### CITATION LIST

### NON-PATENT LITERATURES

Non-Patent Literature 1: 3GPP TS 23.501 V18.2.2 (2023-07)
Non-Patent Literature 2: 3GPP TS 23.502 V18.2.0 (2023-06)
Non-Patent Literature 3: 3GPP TS 33.501 V18.2.0 (2023-06)
Non-Patent Literature 4: 3GPP TS 38.331 V17.5.0 (2023-06)
Non-Patent Literature 5: 3GPP TS 24.501 V18.2.1 (2023-03)
Non-Patent Literature 6: GSMA, SGP. 21, RSP Architecture, version 3.0, 28 March 2022
Non-Patent Literature 7: GSMA, SGP. 22, RSP Technical Specification, version 3.0, 19 October 2022

### SUMMARY OF INVENTION

### TECHNICAL PROBLEM

A terminal equipped with an embedded subscriber identifier module (eSIM) can use a plurality of profiles having subscriber information by switching between the plurality of profiles. Before starting to use a network by using an operational profile (OP), the terminal accesses the network by using a provisional profile (PP) for performing settings required in advance. Since the PP is for the terminal to temporarily access the network, the same PP may be shared by a plurality of terminals. Here, when the plurality of terminals are connected to the network at the same time by using the same PP, the plurality of terminals cannot be distinguished one from another on a side of the network and processing related to the network connection cannot be appropriately executed.

It is an object of the present invention to specify, in a communication system, a procedure related to appropriately connecting a plurality of terminals to the network while using the same provisional profile.

### SOLUTION TO PROBLEM

According to the technology disclosed hereinafter, there is provided a network node including: a reception unit configured to receive a registration request transmitted from a terminal, the registration request including a shared subscriber identifier corresponding to a provisional profile; a control unit configured to store information related to the terminal by associating the shared subscriber identifier with an additional subscriber identifier generated for the terminal; and a transmission unit configured to transmit a message related to registration of the terminal including the shared subscriber identifier and the additional subscriber identifier to another network node.

### ADVANTAGEOUS EFFECTS OF INVENTION

According to the disclosed technology, in a communication system, it is possible to specify a procedure for appropriately connecting a plurality of terminals to a network by using the same provisional profile.

### BRIEF DESCRIPTION OF DRAWINGS

[FIG. 1] FIG. 1 is a diagram illustrating an example of a communication system.
[FIG. 2] FIG. 2 is a diagram illustrating an example of the communication system under a roaming environment.
[FIG. 3] FIG. 3 is a diagram illustrating an example of a first sequence diagram according to an embodiment of the present invention.
[FIG. 4] FIG. 4 is a diagram illustrating an example of a second sequence diagram according to the embodiment of the present invention.
[FIG. 5] FIG. 5 is a diagram illustrating an example of a third sequence diagram according to the embodiment of the present invention.
[FIG. 6] FIG. 6 is a diagram illustrating an example of a functional configuration of a base station 10 and a network node 30 according to the embodiment of the present invention.
[FIG. 7] FIG. 7 is a diagram illustrating an example of a functional configuration of a terminal 20 according to the embodiment of the present invention.
[FIG. 8] FIG. 8 is a diagram illustrating an example of a hardware structure including the base station 10, the terminal 20, and the network node 30 according to the embodiment of the present invention.
[FIG. 9] FIG. 9 is a diagram illustrating a configurational example of a vehicle 2001 according to the embodiment of the present invention.

### DESCRIPTION OF EMBODIMENTS

Embodiments of the present invention will be described in the following with reference to the accompanying drawings. It should be noted that the embodiments described in the following are only examples, and embodiments to which the present invention is applied are not limited to the following embodiments.

In the operation of the wireless communication system according to the embodiment of the present invention, an existing technology is appropriately used. The existing technology includes an existing LTE. However, the existing technology is not limited to the existing LTE. In addition, the term "LTE" as used herein has a broad meaning and includes LTE-Advanced, any methods derived after LTE-Advanced (e.g., NR), or a wireless Local Area Network (LAN) unless otherwise specified.

Furthermore, in the embodiment of the present invention, an expression, a radio (wireless) communication parameter or the like is "configured (set)" includes a case where a predetermined value is "pre-configured (set in advance)" as well as a case where a radio communication parameter provided by notification from the network node 30 or a terminal 20 is set.

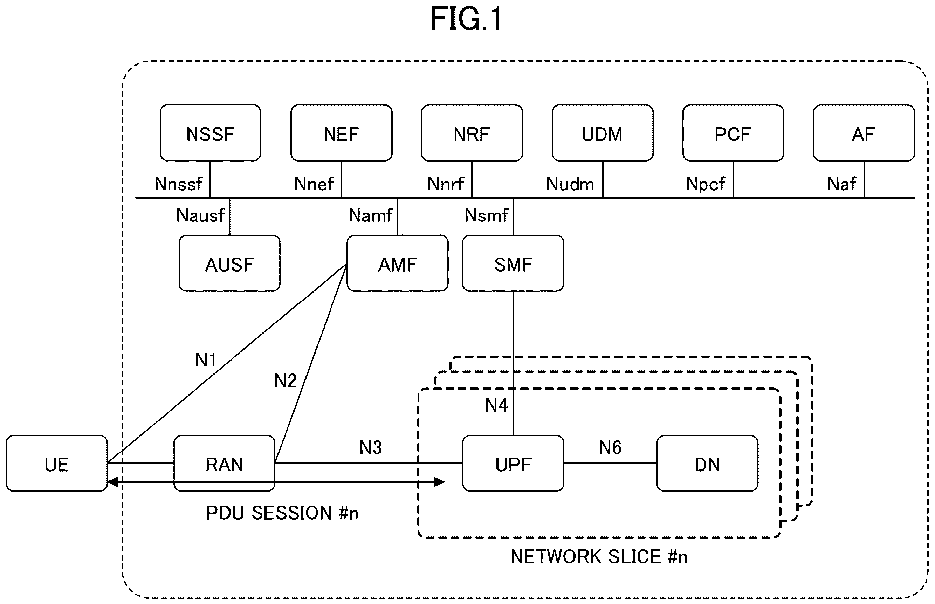

FIG. 1 is a diagram for explaining an example of a communication system. As shown in FIG. 1, the communication system includes a user equipment (UE) as the terminal 20 and a plurality of network nodes 30. Hereinafter, it is assumed that one network node 30 realizes one function, but a plurality of functions may be realized by one network node 30 or a plurality of network nodes 30 may realize one function. Furthermore, the term "connection" described in the following may mean a logical connection or a physical connection.

A Radio Access Network (RAN) is a network node 30 having a radio access function, may include a base station 10, is connected to a UE, and is configured to be connected to an Access and Mobility Management Function (AMF), and a User Plane Function (UPF). The AMF is a network node 30 having functions for achieving such as termination of a RAN interface, termination of a Non-Access Stratum (NAS), registration management, connection management, reachability management, and mobility management. The UPF is a network node 30 having functions such as a Protocol Data Unit (PDU) session point to the outside interconnected with a Data Network (DN), packet routing and forwarding, and Quality of Service (QoS) handling of a user plane. The UPF and the DN are included in a network slice. In a wireless communication network according to the embodiment of the present invention, a plurality of network slices are constructed.

The AMF is connected to the UE, RAN, Session Management Function (SMF), Network Slice Selection Function (NSSF), Network Exposure Function (NEF), Network Repository Function (NRF), Unified Data Management (UDM), Authentication Server Function (AUSF), Policy Control Function (PCF), and Application Function (AF). The AMF, SMF, NSSF, NEF, NRF, UDM, AUSF, PCF, and AF are network nodes 30 connected to each other via interfaces based on their respective services, Namf, Nsmf, Nnssf, Nnef, Nnrf, Nudm, Nausf, Npcf, and Naf.

The SMF is a network node 30 having functions such as session management, Internet Protocol (IP) address assignment and management of UE, Dynamic Host Configuration Protocol (DHCP) function, Address Resolution Protocol (ARP) proxy, roaming function, etc. The NEF is a network node 30 having a function of notifying capabilities and events to another Network Function (NF). The NSSF is a network node 30 having functions such as selecting a network slice to which a UE connects, determining an allowed Network Slice Selection Assistance Information (NSSAI), determining an NSSAI to be set, determining an AMF set to which a UE connects, etc. The PCF is a network node 30 having a function to control a policy of a network. The AF is a network node 30 having a function to control an application server. The NRF is a network node 30 having a function to find an NF instance providing a service. The UDM is a network node 30 for managing subscriber data and authentication data. The UDM is connected to a User Data Repository (UDR) holding the data. The UDM may also have an Authentication credential Repository and Processing Function (ARPF) having a function to perform processing and manage authentication information and a Subscription Identifier De-concealing Function (SIDF) having a function to decrypt encrypted identification information. Alternatively, the UDM may execute these functions by accessing another network node having the ARPF or the SIDF.

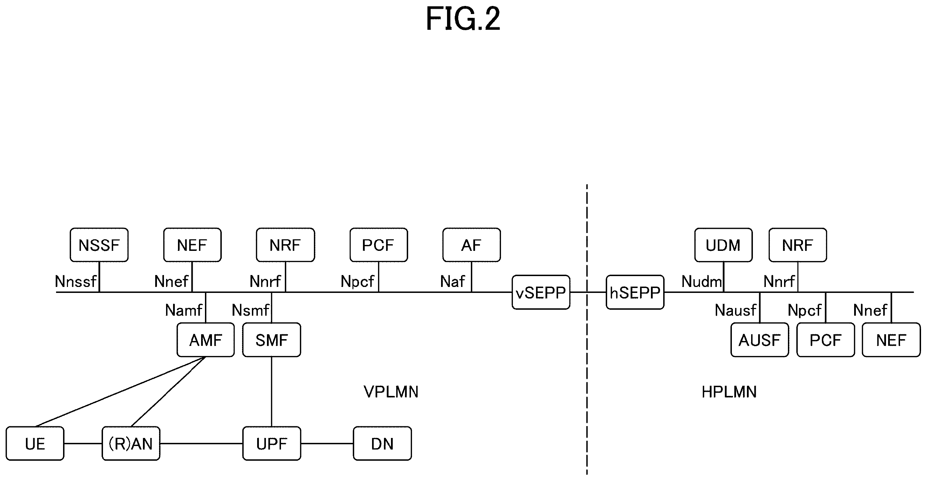

FIG. 2 is a diagram for explaining an example of a communication system under a roaming environment. As shown in FIG. 2, a network includes a UE as the terminal 20 and a plurality of network nodes 30. Hereinafter, one network node 30 realizes one function, but a plurality of functions may be realized by one network node 30, or a plurality of network nodes 30 may realize one function. Furthermore, the term "connection" described in the following may mean a logical connection or a physical connection.

The RAN is a network node 30 having the radio access function, and is connected to the UE, AMF, and UPF. The AMF is a network node 30 having functions such as termination of a RAN interface, termination of the NAS, registration management, connection management, reachability management, and mobility management. The UPF is a network node 30 having functions such as a PDU session point to the outside interconnected with the DN, routing and forwarding of packets, and QoS handling of a user plane. The UPF and the DN are included in a network slice. In the wireless communication network according to the embodiment of the present invention, a plurality of network slices are constructed.

The AMF is connected to the UE, RAN, SMF, NSSF, NEF, NRF, UDM, AUSF, PCF, AF, and Security Edge Protection Proxy (SEPP). The AMF, SMF, NSSF, NEF, NRF, UDM, AUSF, PCF, and AF are network nodes 30 connected to each other via interfaces based on their respective services, Namf, Nsmf, Nnssf, Nnef, Nnrf, Nudm, Nausf, Npcf, and Naf.

The SMF is a network node 30 having functions such as session management, IP address assignment and management of UE, DHCP function, ARP proxy, roaming function, etc. The NEF is a network node 30 having functions to notify capabilities and events to other NFs. The NSSF is a network node 30 having functions such as selecting a network slice to which a UE connects, determining an allowed NSSAI, determining an NSSAI to be set, determining an AMF set to which a UE connects, etc. The PCF is a network node 30 having a function to perform policy control of a network. The AF is a network node 30 having a function to control an application server. The NRF is a network node 30 having a function to find NF instances providing services. The SEPP is a non-transparent proxy and filters messages of a control plane between Public Land Mobile Networks (PLMNs). In FIG. 2, vSEPP is the SEPP in a visited network and hSEPP is the SEPP in a home network.

As shown in FIG. 2, the UE is in a roaming environment connected to a RAN and an AMF in a Visited PLMN (VPLMN). The VPLMN and the Home PLMN (HPLMN) are connected via vSEPP and hSEPP. The UE can communicate with the UDM of the HPLMN via the AMF of the VPLMN, for example.

### (First embodiment)

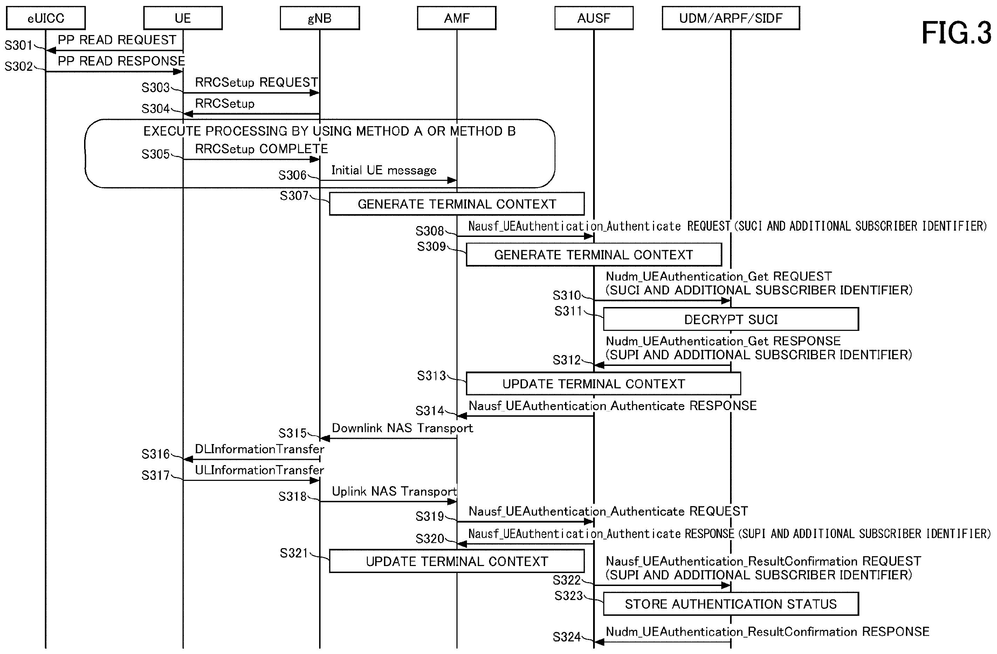

A first embodiment will be described. In the first embodiment, a procedure for appropriate connection to a network by a plurality of terminals by using the same provisional profile in a communication system will be described. FIGS. 3 to 5 are diagrams illustrating examples of the first to third sequence diagrams according to the embodiments of the present invention. An embedded Universal Integrated Circuit Card (eUICC) as illustrated in FIGS. 3 to 5 includes a provisional profile (PP) and an operational profile (OP). The provisional profile (PP) is a profile used to perform pre-configuration before starting use of the network by using the operational profile (OP). The operational profile (OP) is a profile used to use the service provided by a mobile service provider. Since a subscriber identifier (for example, Subscription Permanent Identifier (SUPI), Subscription Concealed Identifier (SUCI)) assigned to the PP is a subscriber identifier commonly used for a plurality of terminals 20 using the PP, this identifier may be referred to as a shared subscriber identifier.

Hereinafter, a registration procedure for connecting the terminal 20 to the network by using the provisional profile (PP) will be described first with respect to the processing of each step in the sequence diagram of FIG. 3.

Step S301: The terminal 20 (UE) sends a request to read the PP to the eUICC.

Step S302: The eUICC reads the PP and sends a response to the received request to the terminal 20. Furthermore, the terminal 20 starts a registration procedure for connecting to the network by using the read PP. For details regarding the existing processing of the registration procedure executed in subsequent steps, see Section 4.2.2.2 of Non-Patent Literature 2. For details regarding authentication in the registration procedure, see Section 6 of Non-Patent Literature 3.

Step S303: The terminal 20 transmits an RRCSetupRequest to the base station 10 (gNB). This request is a message based on an RRC protocol (see Non-Patent Literature 4). This message may be referred to as a radio-connection setup request message.

Step S304: The base station 10 transmits an RRCSetup to the terminal 20.

Hereinafter, an existing procedure will be described for steps S305 and S306.

Step S305: The terminal 20 sends a RRCSetupComplete message to the base station 10. This message includes an SUCI, which is a subscriber identifier for the terminal 20 requesting registration to the network.

Step S306: The base station 10 sends an Initial UE Message to the AMF. This message includes the SUCI received in step S305. This message may also be referred to as an initial terminal message.

In steps S305 and S306 described above, in the first example, either method A (steps S305A and S306A) or method B (steps S305B and S306B) described in the following is performed.

### (Method A)

Step S305A: The terminal 20 generates an additional subscriber identifier which is an additional identifier for identifying a subscriber in order to distinguish between subscribers connecting to the network by using the same PP. The terminal 20 generates, for example, a random number and uses the generated random number as an additional subscriber identifier. The terminal 20 transmits a RRCSetupComplete message to the base station 10. This message includes the SUCI which is a subscriber identifier for the terminal 20 requesting registration to the network and the additional subscriber identifier.

Step S306A: The base station 10 transmits an Initial UE Message to the AMF. This message includes the SUCI received in step S305A and the additional subscriber identifier. This message may also be referred to as an initial terminal message.

### (Method B)

Step S305B: The terminal 20 transmits a RRCSetupComplete message to the base station 10. This message includes an SUCI, which is a subscriber identifier for the terminal 20 requesting registration to the network. This message also includes, a value of "PP use registration" as a setting value, which is a value of a newly defined type indicating registration to the network by using PP as a 5GS registration type (see Section 9.11.3.7 of Non-Patent Literature 5).

Step S306B: The base station 10 transmits an Initial UE Message to the AMF. This message includes the SUCI received in step S305B and the setting value of the 5GS registration type (PP use registration). This message may also be called an initial terminal message. Furthermore, in accordance with the fact that the 5GS registration type is the PP use registration, the AMF generates an additional subscriber identifier which is an additional identifier for identifying the subscriber in order to distinguish between subscribers who connect to the network by using the same PP. The AMF generates, for example, a random number and uses the generated random number as the additional subscriber identifier.

Step S307: The base station 10 stores information (terminal context) related to the terminal 20 connected to the network by using the PP in association with the SUCI and the additional subscriber identifier. In subsequent steps, the terminal context, SUCI, SUPI decoded from the SUCI, and the additional subscriber identifier are also the information and identifiers related to the terminal 20.

Step S308: The AMF transmits an Nausf_UEAuthentication_Authenticate request to the AUSF. This message includes the SUCI and the additional subscriber identifier.

Step S309: The AUSF stores the terminal context in association with the SUCI and the additional subscriber identifier.

Step S310: The AUSF transmits an Nudm_UEAuthentication_Get request to the UDM. The message includes the SUCI and the additional subscriber identifier.

Step S311: The UDM causes the SIDF to decrypt the SUCI received in step S310 and obtain the SUPI.

Step S312: The UDM sends an Nudm_UEAuthentication_Get response to the AUSF. The message includes the SUPI and the additional subscriber identifier.

Step S313: The AUSF updates and stores the terminal context in association with the SUCI, SUPI, and additional subscriber identifier.

Step S314: The AUSF sends an Nausf_UEAuthentication_Authenticate response to the AMF.

Step S315: The AMF sends a Downlink NAS Transport to the base station 10. This message includes information (hereinafter referred to as authentication request) indicating a request to perform authentication.

Step S316: The base station 10 sends a DLInformationTransfer to the terminal 20. This message includes the authentication request.

Step S317: The terminal 20 sends a ULInformationTransfer to the base station 10. This message includes the authentication request.

Step S318: The base station 10 sends Uplink NAS Transport to the AMF. This message contains the authentication request.

Step S319: The AMF sends Nausf_UEAuthentication_Authenticate request to the AUSF.

Step S320: The AUSF sends an Nausf_UEAuthentication_Authenticate response to AMF. This message contains the SUPI and additional subscriber identifier.

Step S321: The AMF updates and stores the terminal context in association with the SUPI and additional subscriber identifier.

Step S322: The AUSF sends an Nudm_UEAuthentication_ResultConfirmation request to the UDM. This message includes the SUPI and additional subscriber identifier.

Step S323: The UDM stores an authentication status (that the authentication result is successful) in association with the SUPI and additional subscriber identifier.

Step S324: The UDM sends an Nudm_UEAuthentication_ResultConfirmation response to the AUSF.

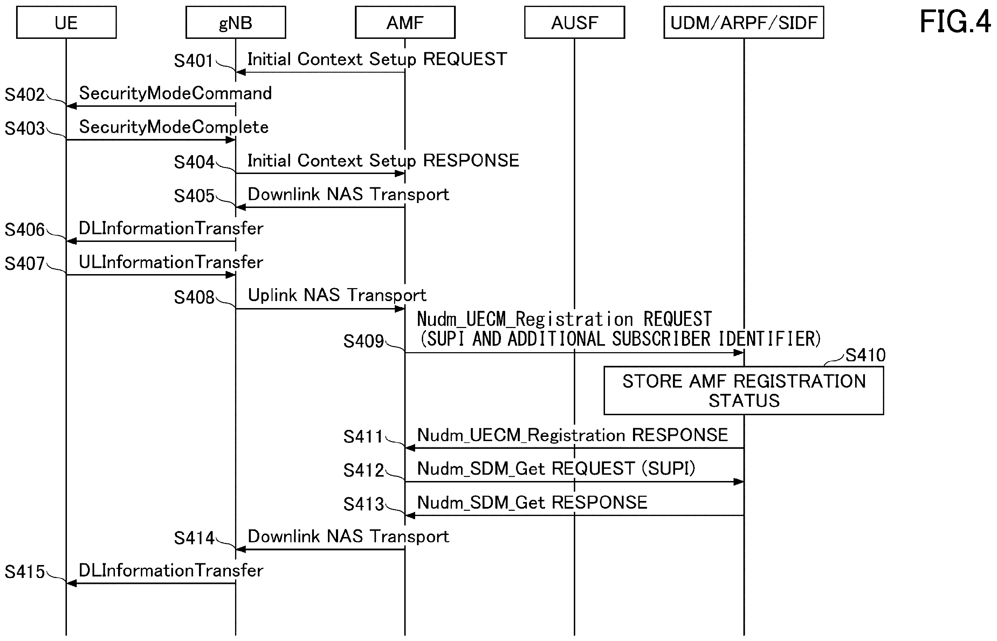

Next, processing of each step following step S324 will be described with reference to the sequence diagram of FIG. 4.

Step S401: The AMF sends an Initial Context Setup request to the base station 10.

Step S402: The base station 10 sends a SecurityModeCommand to the terminal 20.

Step S403: The terminal 20 sends a SecurityModeComplete to the base station 10.

Step S404: The base station 10 sends an Initial Context Setup response to the AMF.

Step S405: The AMF sends a Downlink NAS Transport to the base station 10. This message includes a Security Mode Command.

Step S406: The base station 10 sends a DLInformationTransfer to the terminal 20. This message includes the Security Mode Command.

Step S407: The terminal 20 sends a ULInformationTransfer to the base station 10. This message includes the Security Mode Command.

Step S408: The base station 10 sends an Uplink NAS Transport to the AMF. This message includes the Security Mode Command.

Step S409: The AMF sends an Nudm_UECM_Registration request to the UDM. This message includes the SUPI and additional subscriber identifier.

Step S410: The UDM stores the registration status (successful registration) with respect to the AMF in association with the SUPI and the additional subscriber identifier.

Step S411: The UDM sends an Nudm_UECM_Registration response to the AMF.

Step S412: The AMF sends an Nudm_SDM_Get request to the UDM. This message contains the SUPI.

Step S413: The UDM sends an Nudm_SDM_Get response to the AMF. The message includes subscriber information corresponding to the SUPI.

The processes in steps S411, S412, and S413 are processes in which the AMF obtains subscriber information from the UDM. The subscriber information is common among those using the same PP, and it is not necessary to distinguish one from another in a plurality of terminals 20. Therefore, it is not necessary to include the additional subscriber identifier in the messages transmitted in the processes in steps S411, S412, and S413.

Step S414: The AMF transmits Downlink NAS Transport to the base station 10. This message includes information (hereafter referred to as registration acceptance) indicating that the registration of the terminal 20 is accepted.

Step S415: The base station 10 transmits DLInformationTransfer to the terminal 20. This message includes the registration acceptance.

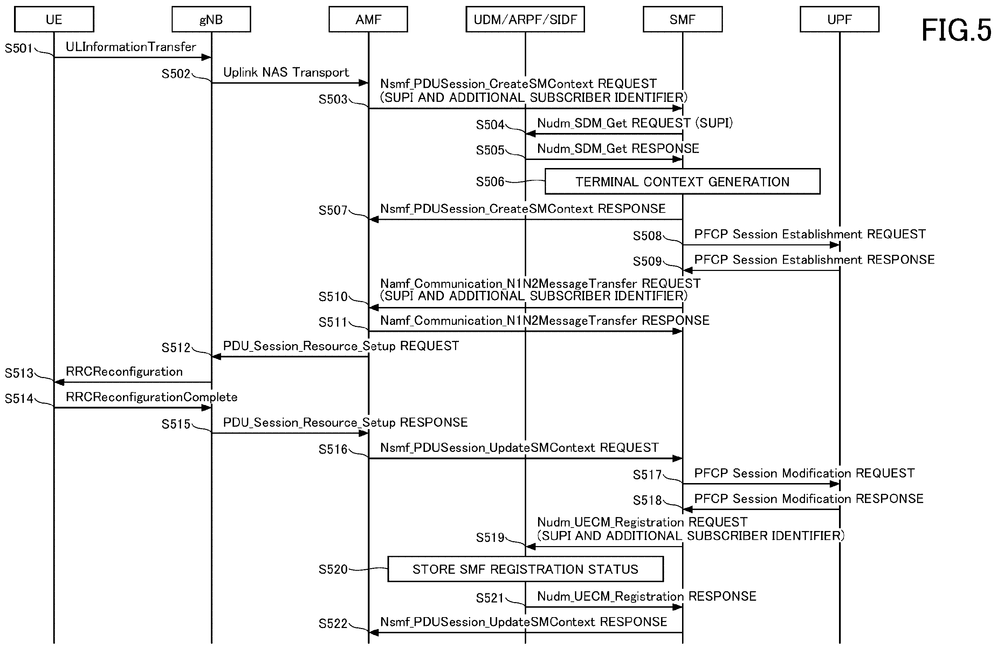

Next, a PDU session establishment procedure by using a provisional profile (PP) will be described with reference to the sequence diagram of FIG. 5. The processing of each step shown in FIG. 5 will be described in the following.

Step S501: The terminal 20 transmits a ULInformationTransfer message to the base station 10. This message includes information requesting establishment of a PDU session (hereinafter referred to as a PDU session establishment request).

Step S502: The base station 10 transmits an Uplink NAS Transport message to the AMF. This message includes a PDU session establishment request.

Step S503: The AMF sends an Nsmf_PDUSession_CreateSMContext request to the SMF. This message contains an SUPI and additional subscriber identifier.

Step S504: The SMF sends an Nudm_SDM_Get request to the UDM. This message contains the SUPI.

Step S505: The UDM sends Nudm_SDM_Get response to the SMF. This message contains subscriber information corresponding to the SUPI.

The processes in steps S504 and S505 are processes in which the SMF obtains subscriber information from the UDM. The subscriber information is common among those using the same PP, and there is no need to distinguish one from another in a plurality of terminals 20. Therefore, there is no need to include the additional subscriber identifier in the messages transmitted in the processes in steps S504 and S505.

Step S506: The SMF stores the terminal context in association with the SUPI and additional subscriber identifier.

Step S507: The SMF sends an Nsmf_PDUSession_CreateSMContext response to the AMF.

Step S508: The SMF sends a PFCP Session establishment request to the UPF.

Step S509: The UPF sends a PFCP Session Establishment response to the SMF.

Step S510: The SMF sends an Namf_Communication _N1N2MessageTransfer request to the AMF. The message contains the SUPI and additional subscriber identifier.

Step S511: The AMF sends an Namf_Communication _N1N2MessageTransfer response to the SMF.

Step S512: The AMF sends a PDU_Session_Resource_Setup request to the base station 10.

Step S513: The base station 10 sends RRCReconfiguration to the terminal 20.

Step S514: The terminal 20 sends RRCReconfigurationComplete to the base station 10.

Step S515: The base station 10 sends a PDU_Session_Resource_Setup response to the AMF.

Step S516: The AMF sends an Nsmf_PDUSession_UpdateSMContext request to the SMF.

Step S517: The SMF sends a PFCP Session Modification request to the UPF.

Step S518: The UPF sends a PFCP Session Modification response to the SMF.

Step S519: The SMF sends an Nudm_UECM_Registration request to the UDM. This message contains the SUPI and additional subscriber identifier.

Step S520: The UDM stores the registration status (successful registration) with respect to the SMF in association with the SUPI and additional subscriber identifier.

Step S521: The UDM sends an Nudm_UECM_Registration response to the SMF.

Step S522: The SMF sends an Nsmf_PDUSession_UpdateSMContext response to the AMF.

With the above-described processing, even when registering a plurality of terminals to the network by using the same PP, registration processing and PDU session establishment processing can be appropriately performed by using the additional subscriber identifier assigned to each terminal.

According to the above-described embodiments, in a communication system, a procedure for appropriately connecting a plurality of terminals to the network by using the same provisional profile can be specified.

### (Apparatus configuration)

Next, an example of the functional configurations of the base station 10, network node 30, and terminal 20 for performing the processes and operations described above will be described. The base station 10, network node 30, and terminal 20 include functions for performing the above-described embodiments. However, the base station 10, network node 30, and terminal 20 may each include only a part of the functions described in the embodiments.

### <Base station 10 and network node 30>

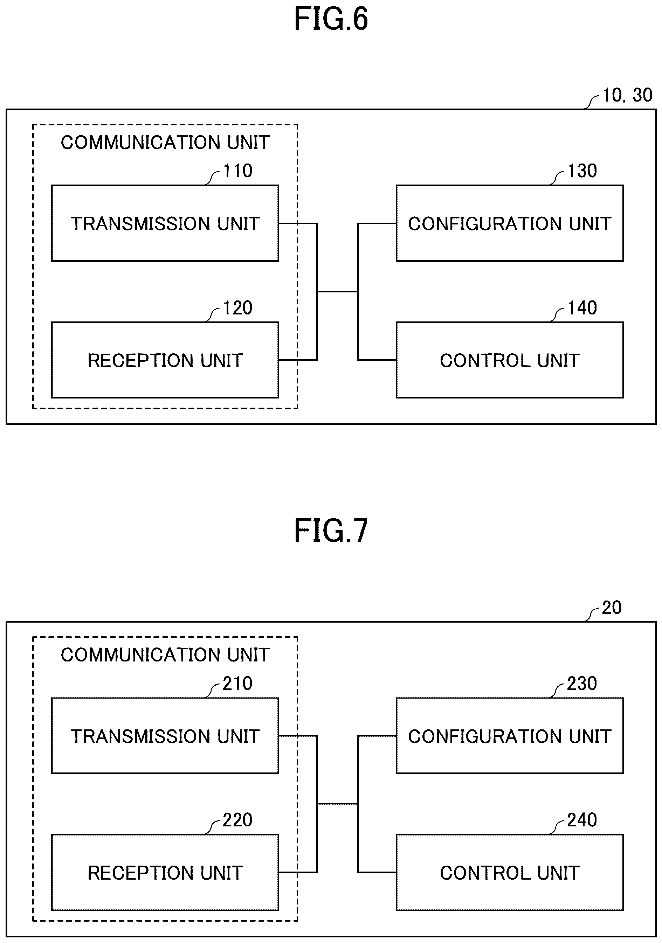

FIG. 7 is a diagram illustrating an example of the functional configuration of the base station 10 and the network node 30. As shown in FIG. 7, the base station 10 includes a transmission unit 110, a reception unit 120, a configuration unit 130, and a control unit 140. The functional configuration shown in FIG. 7 is only an example. As long as the operation according to the embodiment of the present invention can be performed, any functional classification and any name of the functional unit may be used. The network node 30 may have the same functional configuration as the base station 10. In addition, the network node 30 having a plurality of different functions in a system architecture may include a plurality of network nodes 30 divided by each function.

The transmission unit 110 includes a function of generating a signal to be transmitted to the terminal 20 or another network node 30 and transmitting the signal via wire or wireless. The reception unit 120 includes a function of receiving various signals transmitted from the terminal 20 or another network node 30 and obtaining, for example, information of a higher layer from the received signal. A communication unit including the transmission unit 110 and reception unit 120 may be formed.

The configuration unit 130 stores pre-configured information and various types of configuration information to be transmitted to the terminal 20 in a memory, and reads out the stored information from the memory as necessary.

The control unit 140 performs processing related to the registration procedure of the terminal 20, as described in the embodiment. The control unit 140 also performs processing related to communication with the terminal 20. A functional unit in the control unit 140 related to signal transmission may be included in the transmission unit 110, and a functional unit in the control unit 140 related to signal reception may be included in the reception unit 120.

### <Terminal 20>

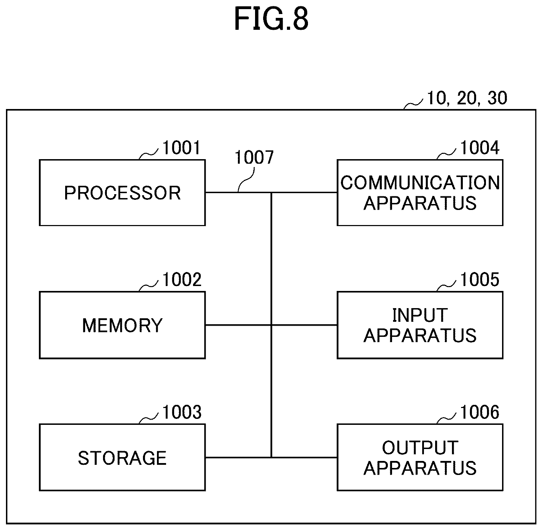

FIG. 8 is a diagram illustrating an example of the functional configuration of the terminal 20. As shown in FIG. 8, the terminal 20 includes a transmission unit 210, a reception unit 220, a configuration unit 230, and a control unit 240. The functional configuration as illustrated in FIG. 8 is only an example. As long as the operation according to the embodiment of the present invention can be performed, any functional classification and any names of the functional units may be used. The communication device serving as the resource holder 20 may have the same functional configuration as the terminal 20.

The transmission unit 210 creates a transmission signal from transmission data and wirelessly transmits the transmission signal. The reception unit 220 wirelessly receives various signals and obtains a signal of a higher layer from the received signal of a physical layer. The reception unit 220 also has a function of receiving a control signal or a reference signal transmitted from the network node 30. The communication unit may be configured to include the transmission unit 210 and the reception unit 220.

The configuration unit 230 stores various kinds of configuration information received from the network node 30 by the reception unit 220 in the memory and reads out the configuration information from the memory as necessary. The configuration unit 230 also stores the pre-configuration information.

As described in the embodiment, the control unit 240 performs processing related to the registration procedure, processing for storing the terminal context in association with the additional subscriber identifier, and the like. A functional unit related to signal transmission in the control unit 240 may be included in the transmission unit 210, and a functional unit related to signal reception in the control unit 240 may be included in the reception unit 220.

### (Hardware structure)

The block diagrams that have been used to describe the above embodiments (FIG. 7 and FIG. 8) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but the functions are by no means limited to these. For example, the functional block (component) to implement a function of transmission may be referred to as a transmission unit or a transmitter. The method for implementing each component is not particularly limited as described above.

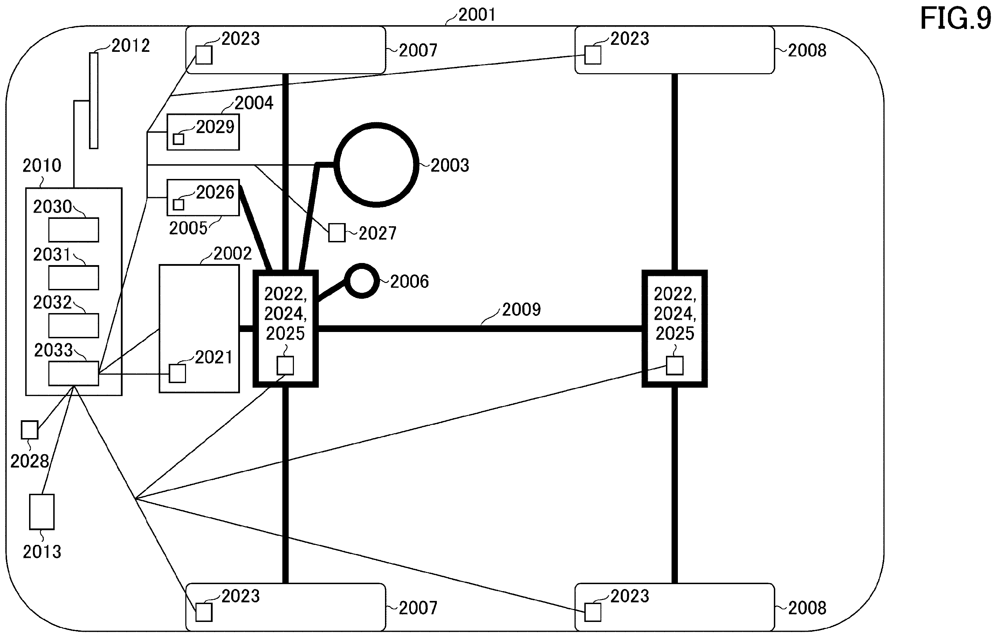

For example, the base station 10, the network node 30, the terminal 20, etc., according to an embodiment of the present disclosure may function as a computer for processing the wireless communication method of the present disclosure. FIG. 9 is a diagram to show an example of a hardware structure of the base station 10 and the terminal 20 according to one embodiment of the present disclosure. The network node 30 may have a hardware structure that is similar to that of the base station 10. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in FIG. 7 may be implemented by control programs that are stored in the memory 1002 and that operate on the processor 1001. In addition, for example, the control unit 240 of the terminal 20 illustrated in FIG. 8 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register", a "cache", a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, a transmission/reception antenna, an amplifier unit, a transmission/reception unit, a transmission line interface, and the like, may be implemented by the communication apparatus 1004. The transmission/reception unit may be physically or logically divided into a transmission unit and a reception unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by the bus 1007 for communicating information. The bus 1007 may be formed with a single bus, or may be formed with buses that vary between pieces of apparatus.

Also, the base station 10 and the terminals 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

FIG. 9 shows an example of a configuration of a vehicle 2001. As shown in FIG. 9, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an Electronic Control Unit (ECU).

The signals from the various sensors 2021 to 2029 include a current signal from a current sensor 2021 that senses the current of the motor, a front and rear wheel rotation signals acquired by a revolution sensor 2022, a front and rear wheel pneumatic signals acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a vehicle navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a Light Detection and Ranging (LiDAR), a camera, a positioning locator (e.g., GNSS, etc.), map information (e.g., high definition (HD) map, autonomous vehicle (AV) map, etc.), a gyro system (e.g., Inertial Measurement Unit (IMU), Inertial Navigation System (INS), etc.), an Artificial Intelligence (AI) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through wireless communication. The communication module 2013 may be arranged internally or externally of the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, a PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Summary of embodiments)

As described above, according to an embodiment of the present invention, there is provided a network node including: a reception unit configured to receive a registration request transmitted from a terminal, the registration request including a shared subscriber identifier corresponding to a provisional profile; a control unit configured to store information related to the terminal by associating the shared subscriber identifier with an additional subscriber identifier generated for the terminal; and a transmission unit configured to transmit a message related to registration of the terminal including the shared subscriber identifier and the additional subscriber identifier to another network node.

According to the configuration described above, in the communication system, it is possible to specify a procedure for appropriately connecting a plurality of terminals to a network by using the same provisional profile.

The transmission unit may transmit a request message including the shared subscriber identifier for obtaining the subscriber information corresponding to the shared subscriber identifier to a network node managing the subscriber information. The reception unit may receive the subscriber information corresponding to the shared subscriber identifier from the network node managing the subscriber information.

According to the configuration described above, in the communication system, it is possible to specify a procedure for appropriately connecting a plurality of terminals to a network by using the same provisional profile.

Furthermore, according to an embodiment of the present invention, there is provided a terminal including: a control unit configured to include, in a registration request, a shared subscriber identifier corresponding to the provisional profile and an additional subscriber identifier generated for own terminal or information indicating that the provisional profile is used; and a transmission unit configured to transmit the registration request to a network node via a base station.

According to the configuration described above, in the communication system, it is possible to specify a procedure for appropriately connecting a plurality of terminals to a network by using the same provisional profile.

Furthermore, according to an embodiment of the present invention, there is provided a network node including: a reception unit configured to receive a session establishment request including a shared subscriber identifier corresponding to a provisional profile and an additional subscriber identifier generated for a terminal using the provisional profile from another network node; and a control unit configured to store information about the terminal by associating the shared subscriber identifier with the additional subscriber identifier generated for the terminal.

According to the configuration described above, in the communication system, it is possible to specify a procedure for appropriately connecting a plurality of terminals to a network by using the same provisional profile.

Furthermore, there is provided a transmission unit configured to transmit a request message including the shared subscriber identifier for obtaining subscriber information corresponding to the shared subscriber identifier to a network node that manages the subscriber information, and the reception unit may receive the subscriber information that corresponds to the shared subscriber identifier from the network node that manages the subscriber information.

According to the configuration described above, in the communication system, it is possible to specify a procedure for appropriately connecting a plurality of terminals to a network by using the same provisional profile.

Furthermore, according to an embodiment of the present invention, there is provided a communication method executed by a network node including: a step of receiving a registration request including the shared subscriber identifier corresponding to the provisional profile transmitted from a terminal; a step of storing information related to the terminal by associating the shared subscriber identifier with an additional subscriber identifier generated for the terminal; and a step of transmitting a message relating to registration of the terminal including the shared subscriber identifier and the additional subscriber identifier to another network node.

According to the configuration described above, in the communication system, it is possible to specify a procedure for appropriately connecting a plurality of terminals to a network by using the same provisional profile.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., Downlink Control Information (DCI), Uplink Control Information (UCI)), upper layer signaling (e.g., Radio Resource Control (RRC) signaling, Medium Access Control (MAC) signaling, broadcast information (Master Information Block (MIB), System Information Block (SIB)), other signals, or combinations thereof. Also, the RRC signaling may be referred to as an "RRC message", and can be, for example, an RRC connection setup message, an RRC connection reconfiguration message, and so on.

Each aspect/embodiment described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) ("x" of "xG" is an integer or decimal), Future Radio Access (FRA), New Radio (NR), New Radio Access (NX), Future generation radio access (FX), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, or a next generation system enhanced, changed, generated, or specified therefrom. A plurality of systems may be combined (for example, a combination of LTE or LTE-A and 5G, and the like) for application.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by the base stations 10, one or more network nodes (for example, Mobility Management Entities (MMEs), Serving-Gateways (S-GWs), and so on may be possible, but these are not limiting) other than the base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed by using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Furthermore, software, instructions, information, and the like may be transmitted and received via a transmission medium. For example, in the case where software is transmitted from a website, server, or other remote source by using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present disclosure may be represented by using any one of various different technologies. For example, data, an instruction, a command, information, a signal, a bit, a symbol, a chip, or the like, described throughout the present disclosure, may be represented by a voltage, an electric current, electromagnetic waves, magnetic fields, a magnetic particle, optical fields, a photon, or a combination thereof.

It should be noted that a term used in the present disclosure and/or a term required for understanding of the present disclosure may be replaced by a term having the same or similar meaning. For example, a channel and/or a symbol may be a signal (signaling). Furthermore, a signal may be a message. Furthermore, a component carrier (CC) may be referred to as a carrier frequency, cell, frequency carrier, or the like.

As used in the present disclosure, the terms "system" and "network" are used interchangeably.

Furthermore, the information, parameters, and the like, described in the present disclosure may be expressed by using absolute values, relative values from predetermined values, or they may be expressed by using corresponding different information. For example, a radio resource may be what is indicated by an index.

The names used for the parameters described above are not used as limitations. Furthermore, the mathematical equations that use these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station or a mobile station may be referred to as a "transmitting apparatus", a "receiving apparatus", a "wireless communication apparatus", and so on. Note that at least one of the base station or the mobile station may be a device mounted on a moving object or a moving object itself, and so on. The moving object is an object that can move, and the moving speed can be any speed. In addition, a moving object that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of the base station or the mobile station also includes an apparatus which does not necessarily move during communication operation. For example, at least one of the base station or the mobile station may be an Internet of Things (IoT) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)", "Vehicle-to-Everything (V2X)", and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as a base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database, or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Furthermore, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other by using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS", and may be referred to as a "pilot", and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "means" included in the configuration of each of the above apparatuses may be replaced by "parts", "circuits", "devices", etc.

In the case where the terms "include", "including", and variations thereof are used in the present disclosure, these terms are intended to be comprehensive in the same way as the term "comprising". Furthermore, the term "or" used in the present disclosure is not intended to be an "exclusive or".

In the present disclosure, where an article is added by translation, for example "a", "an", and "the", the disclosure may include that the noun following these articles is plural.

In the present disclosure, the term "A and B are different" may mean "A and B are different from each other". It should be noted that the term "A and B are different" may mean "A and B are different from C". Terms such as "separated" or "combined" may be interpreted in the same way as the above-described "different".

An aspect/embodiment described in the present specification may be used independently, may be used in combination, or may be used by switching according to operations. Furthermore, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Although the present disclosure has been described in detail above, it will be apparent to those skilled in the art that the present disclosure is not limited to the embodiments described in the present disclosure. The present disclosure may be modified and changed without departing from the spirit and scope of the present disclosure as defined by the appended claims. Accordingly, the description of the present disclosure is for illustrative purposes and does not have any restrictive meaning to the present disclosure.

### DESCRIPTION OF THE REFERENCE NUMERALS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 30: Network node
- 1001: Processor
- 1002: Memory
- 1003: Storage
- 1004: Communication apparatus
- 1005: Input apparatus
- 1006: Output apparatus
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port (IO port)

## Claims

1. A network node, comprising:
a reception unit configured to receive a registration request transmitted from a terminal, the registration request including a shared subscriber identifier corresponding to a provisional profile;
a control unit configured to store information related to the terminal by associating the shared subscriber identifier with an additional subscriber identifier generated for the terminal; and
a transmission unit configured to transmit a message related to registration of the terminal including the shared subscriber identifier and the additional subscriber identifier to another network node.

2. The network node according to claim 1, wherein
the transmission unit transmits a request message including the shared subscriber identifier for obtaining subscriber information corresponding to the shared subscriber identifier to a network node managing the subscriber information, and
the reception unit receives the subscriber information corresponding to the shared subscriber identifier from the network node managing the subscriber information.

3. A terminal, comprising:
a control unit configured to include, in a registration request, a shared subscriber identifier corresponding to a provisional profile and an additional subscriber identifier generated for own terminal or information indicating that the provisional profile is used; and
a transmission unit configured to transmit the registration request to a network node via a base station.

4. A network node, comprising:
a reception unit configured to receive a session establishment request including a shared subscriber identifier corresponding to a provisional profile and an additional subscriber identifier generated for a terminal using the provisional profile from another network node; and
a control unit configured to store information about the terminal by associating the shared subscriber identifier with the additional subscriber identifier generated for the terminal.

5. The network node according to claim 4, further comprising:
a transmission unit configured to transmit a request message including the shared subscriber identifier for obtaining subscriber information corresponding to the shared subscriber identifier to a network node that manages the subscriber information, wherein
the reception unit receives the subscriber information that corresponds to the shared subscriber identifier from the network node that manages the subscriber information.

6. A communication method executed by a network node, the communication method comprising:
a step of receiving a registration request transmitted from a terminal, the registration request including a shared subscriber identifier corresponding to a provisional profile;
a step of storing information related to the terminal by associating the shared subscriber identifier with an additional subscriber identifier generated for the terminal; and
a step of transmitting a message relating to registration of the terminal including the shared subscriber identifier and the additional subscriber identifier to another network node.
